# EUROPEAN PATENT SPECIFICATION

(11) **EP 4 303 046 B1**
(45) Date of publication and mention of the grant of the patent: **03.09.2025**
(21) Application number: 23182733.8
(22) Date of filing: 30.06.2023
(51) Int. Cl.: B60H 1/32, F25D 11/00, F04D 29/52, F04D 29/60, F04D 29/64

(54) **REFRIGERATION SYSTEM STATOR MOUNT**
STATORHALTERUNG FÜR EIN KÜHLSYSTEM
SUPPORT DE STATOR DE SYSTÈME DE RÉFRIGÉRATION

(30) Priority: 01.07.2022 US 202263357738 P
(43) Date of publication of application: 10.01.2024
(60) Divisional application: 25186070.6
(73) Proprietor: Carrier Corporation, Palm Beach Gardens, FL 33418 (US)
(72) Inventor: RAU, Mark, Syracuse, 13221 (US); BUSHNELL, Peter, Syracuse, 13221 (US)
(74) Representative: Dehns

(56) References cited:
- EP-A1- 3 686 525
- EP-A2- 0 962 343
- WO-A1-2009/014514

## Description

### BACKGROUND

The present invention relates to a transport refrigeration unit.

Refrigerated trucks, trailers, and containers are commonly used to transport perishable cargo, such as, for example, produce, meat, poultry, fish, dairy products, cut flowers, pharmaceuticals and other fresh or frozen perishable products. Conventionally, transport refrigeration systems include a transport refrigeration unit having a refrigerant compressor, a condenser with one or more associated condenser fans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

Although the existing evaporator fan and bracket for mounting the evaporator fan are suitable, these components may be optimized to reduce the inefficiencies in the airflow provided to the fan.

EP 3 686 525 A1 discloses a heat exchanger including a plurality of tube elements including a first tube segment and a second tube segment and at least one return bend connecting an end of the first tube segment to the second tube segment such that the plurality of tube elements and the at least one return bend define a fluid flow path of the heat exchanger. The at least one return bend is positioned within a cavity isolated from a remainder of the heat exchanger.

WO 2009/014514 A1 discloses an evaporator air management system for trailer refrigeration systems, including an electrically powered, vertical axis, axial flow fan, arranged so as to draw air through a horizontally mounted evaporator coil. The flow is then driven upward through a nozzle and discharged into the trailer. The nozzle shape graduates from a circular cross-section to a wide-aspect ratio rectangular cross-section, while turning through 90°. The preferred choice of axial flow fan for the invention is the vane-axial type incorporating outlet guide vanes. Provision is made for a single fan-nozzle configuration which may be either centered or transversely off-set with respect to the evaporator coil. An additional option provides for an arrangement with a pair of side-by-side fan-nozzles.

EP 0 962 343 A2 discloses a power package, comprising a diesel engine and a permanent magnet generator, accommodated in a lower section of a main support frame mounted on a front wall of a cargo container. A compressor, a pair of vane axial fan units, a pair of centrifugal fan units and auxiliary centrifugal fan units are driven by the power supply from the generator. A mounting bracket is formed to the main support frame for mounting the power package. The compressor, is mounted within the mounting bracket above and to one side of the diesel engine and the generator. A condenser evaporator is mounted on the forward compartment and an evaporator heat exchanger is mounted on the rear compartment of the upper section. A condenser air passage is formed behind the condenser heat exchanger and an evaporation air passage is formed behind the evaporator heat exchanger. The condenser heat exchanger is connected to the discharge side of the compressor and the evaporator heat exchanger is connected to the suction side of the compressor. A refrigerant line having an expansion value connects both the heat exchangers. The vane axial fan units are mounted in the bottom of the condenser air passage for drawing ambient air through the condenser heat exchanger, and discharging the drawn air into the lower section of the main support frame for cooling the power package and the compressor. The electrically driven centrifugal fan units are mounted on top of the rear compartment of the upper section for drawing in the air from container through the evaporator heat exchanger and discharging back to the container. The centrifugal fans are arranged to turn in opposite direction to direct the conditioned air along the top wall of the container. The auxiliary centrifugal fan is provided for the evaporation heat exchanger side, which, with the two centrifugal fans, discharges to the three zones of the container. The vane axial fans are provided with a diffuser each in the discharge side.

### BRIEF DESCRIPTION

In accordance with the present invention, there is provided a transport refrigeration unit as set out in independent claim 1. Preferred embodiments of the present invention are laid down in the appended dependent claims.

### BRIEF DESCRIPTION OF THE DRAWINGS

The following descriptions should not be considered limiting in any way. With reference to the accompanying drawings, like elements are numbered alike:
FIG. 1 is a perspective view of an exemplary transport refrigeration system;
FIG. 2 is a cross-sectional view of the transport refrigeration unit of FIG. 1;
FIG. 3 is a perspective view of a transport refrigeration unit from an interior of a cargo container;
FIG. 4 is a partially exploded view of a fan assembly and a fan and nozzle unit of a transport refrigeration unit;
FIG. 5 is a perspective view of fan and nozzle unit having an exemplary mounting bracket and fan;
FIG. 6 is a cross-sectional view of the fan and nozzle unit of FIG. 5;
FIG. 7 is a perspective view of an exemplary mounting bracket and fan;
FIG. 8 is a partially exploded view of a fan assembly and a fan and nozzle unit of FIG. 5;
FIG. 9 is a front perspective view of an exemplary mounting bracket installed within an interior region of a fan and nozzle unit;
FIG. 10 is a top view of an exemplary stator assembly mounted to a mounting bracket;
FIG. 11 is a perspective view of an exemplary mounting bracket;
FIG. 12 is a bottom perspective view of the exemplary mounting bracket of FIG. 11;
FIG. 13 is a bottom perspective view of an exemplary mounting bracket installed within an interior region of a fan and nozzle unit; and
FIG. 14 is another bottom perspective view of an exemplary mounting bracket installed within an interior region of a fan and nozzle unit;
FIG. 15 is a bottom perspective view of the exemplary mounting bracket of FIG. 11; and
FIG. 16 is a bottom perspective view of an exemplary mounting bracket installed within an interior region of a fan and nozzle unit.

### DETAILED DESCRIPTION

A detailed description of one or more embodiments of an exemplary transport refrigeration system are presented herein by way of exemplification and not limitation with reference to the Figures.

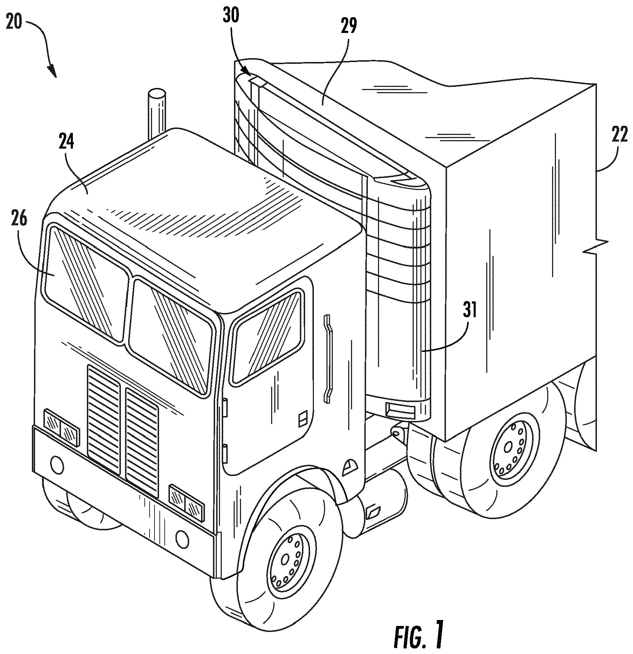

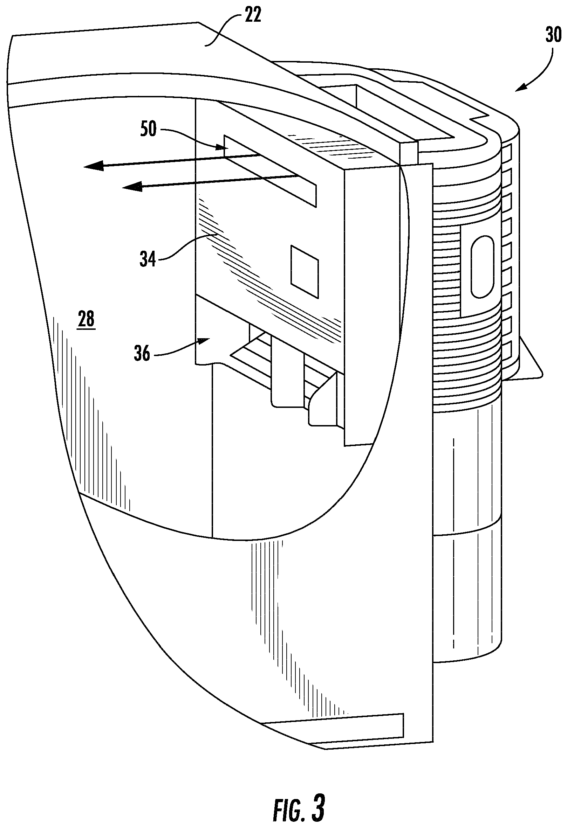

With reference now to FIG. 1, an exemplary transport refrigeration system 20 is illustrated. In the illustrated, non-limiting embodiment, the transport refrigeration system 20 is shown as a trailer system. As shown, the transport refrigeration system 20 includes a cargo container or trailer 22. The cargo container 22 may be towed or otherwise transported by a tractor 24 including an operator's compartment or cab 26 an engine or other power source, such as a fuel cell for example, which acts as the drivetrain system of the tractor 24. A transport refrigeration unit (TRU) 30 is configured to maintain cargo located within the internal cargo area 28 (see FIG. 3) of the container 22 at a selected temperature by cooling the cargo space of the container 22. As shown, the TRU 30 is typically mounted at the front wall 29 of the container 22. Together, the TRU 30 and the cargo container 22 may form a transport refrigeration system 20. However, embodiments where the transport refrigeration system 20 is additionally interpreted to include the tractor 24 are also contemplated herein. Further, it should be appreciated by those of skill in the art that embodiments described herein may be applied to any transport refrigeration system such as, for example shipping containers that are shipped by rail, sea (via a watercraft), or any other suitable container, without use of a tractor 24.

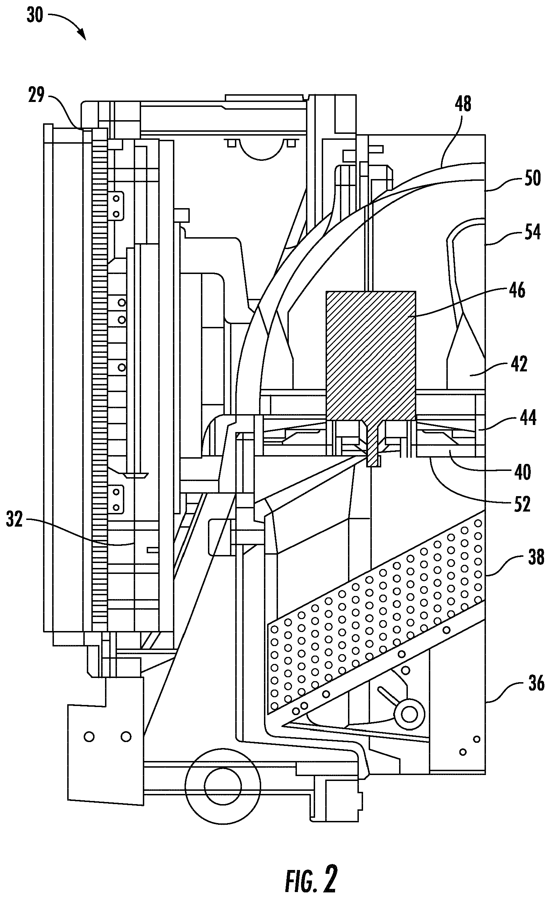

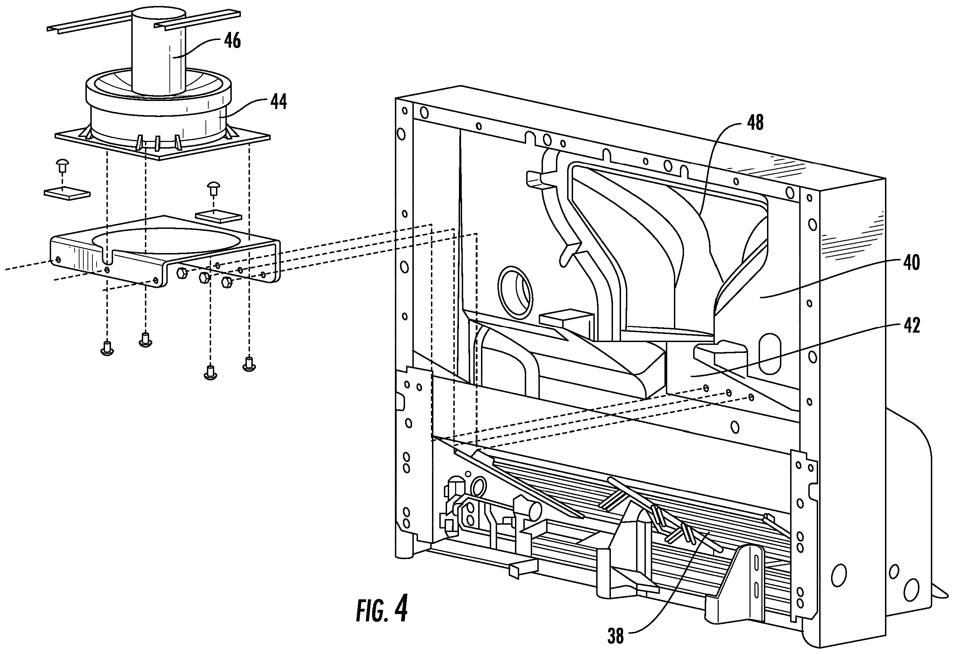

As best shown in FIG. 2, the TRU 30 includes an exterior condenser 32 that projects forward of the front wall 29 and an interior evaporator section 34 disposed within the front wall 30 and that projects rearwardly toward the cargo area 28 of the trailer 20. With reference now to FIGS. 3 and 4, an example of an evaporator section 34 of the TRU 30 is illustrated in more detail. The evaporator section 34 includes an inlet 36 that receives return air from the cargo area 28 of the trailer body 22. Mounted within a lower portion of the evaporator section 34 is an evaporator coil 38. The evaporator coil 38 may be mounted at an angle, as shown, to increase the effective surface area and assist in condensate drainage. However, embodiments where the evaporator coil 38 is mounted with a different configuration are also within the scope of the invention.

Mounted on a support deck of the evaporator section 34 is a fan and nozzle unit 40 having one or more interior regions. Disposed within an interior region 42 adjacent the bottom of the fan and nozzle unit 40 is an axial flow fan 44 and an electric drive motor 46 positioned vertically above the fan 44. The axes of the fan 44 and the drive motor 46 are vertically oriented. The nozzle 48 of the fan and nozzle unit 40 extends from adjacent the fan 44 to an outlet 50. In the illustrated, non-limiting embodiment, a first end 52 of the nozzle 48, is generally rounded so as to surround the fan 44. Moving from the first end 52 to a second end 54, the nozzle 48 decreases in cross-sectional area and gradually transitions from the circular shape to a wide aspect ratio rectangular cross-section, while also turning approximately 90 degrees to a rearwardly facing outlet 50.

During operation, the return air from the cargo area 28 of the trailer 20 is drawn into the inlet 36, passed through the evaporator coil 38 where the air is cooled, and is then blown out of the outlet 50 toward the rear of the cargo area 28, to cool the cargo. It should be understood that the TRU 30 illustrated and described herein is intended as an example only. Accordingly, other transport refrigeration units having an inlet 36 for receiving air from the cargo area 28 of the container 22 and an outlet 50 for discharging cool air into the cargo area 28 of the container 22 are also within the scope of the invention.

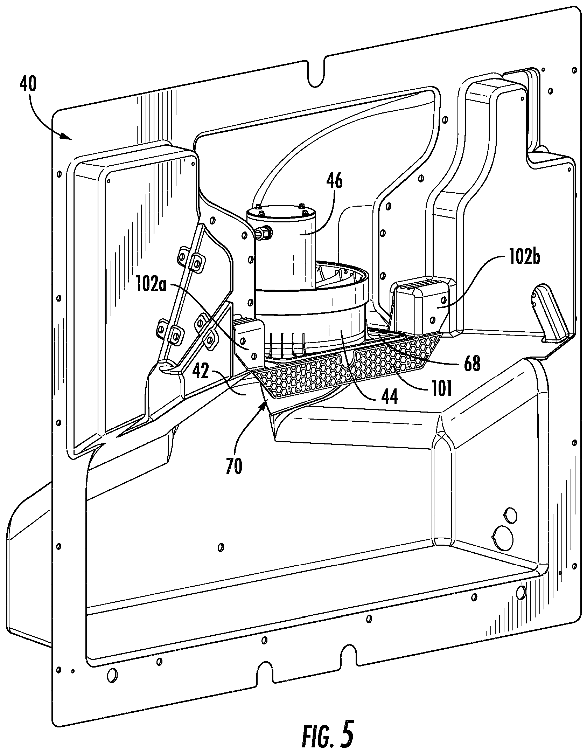

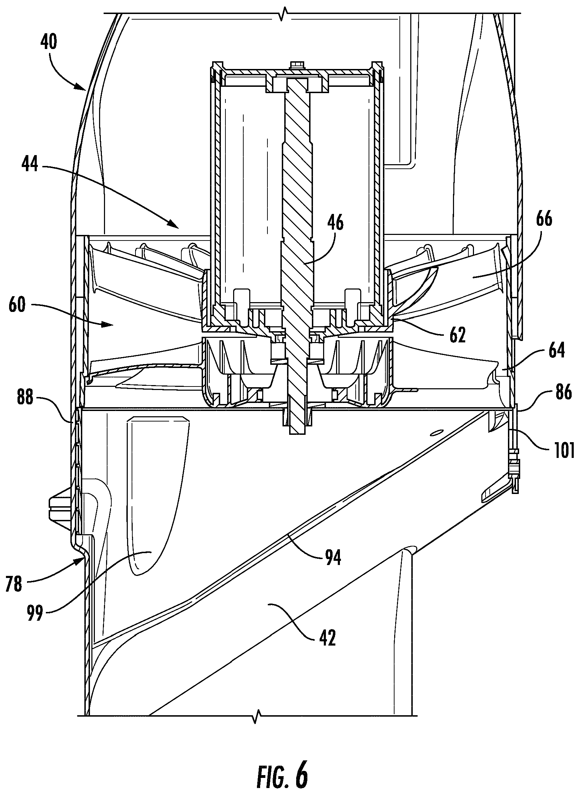

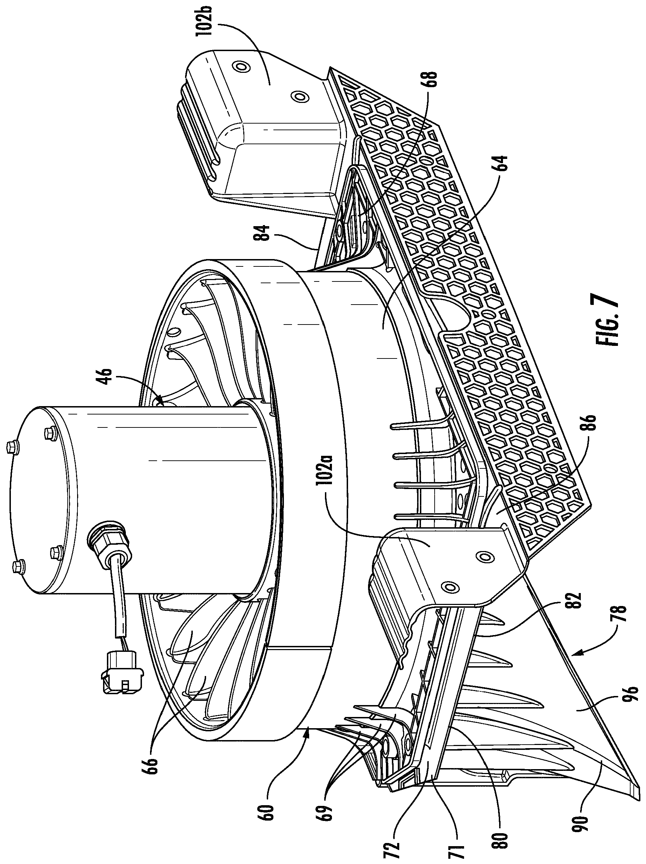

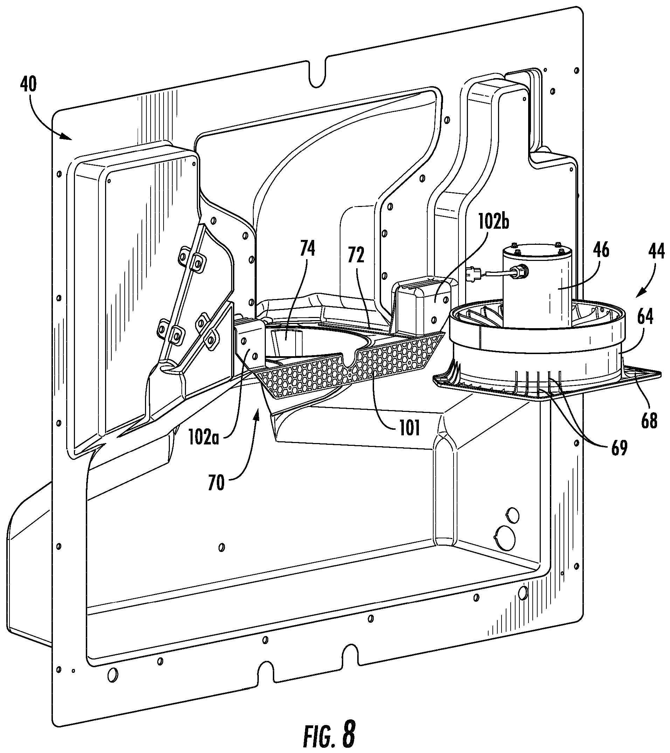

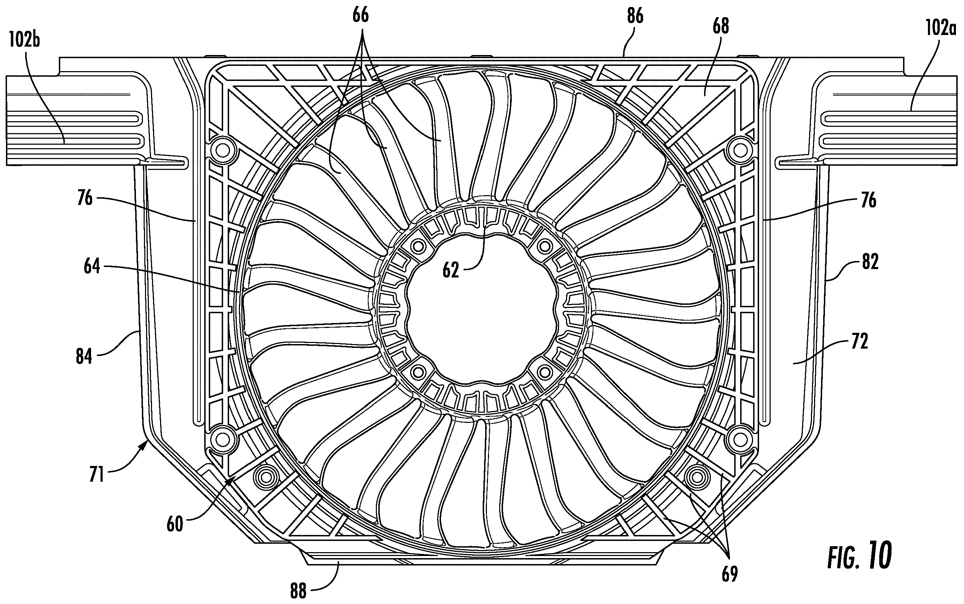

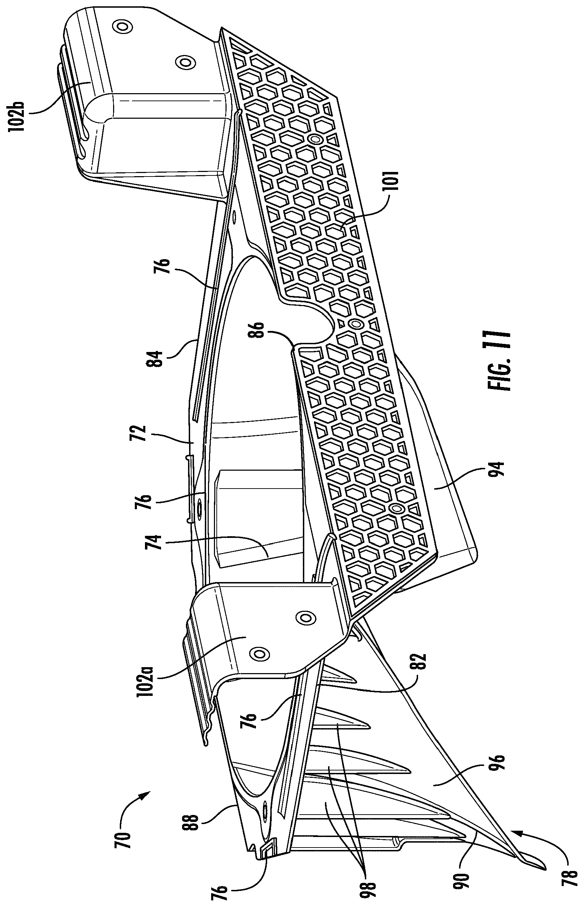

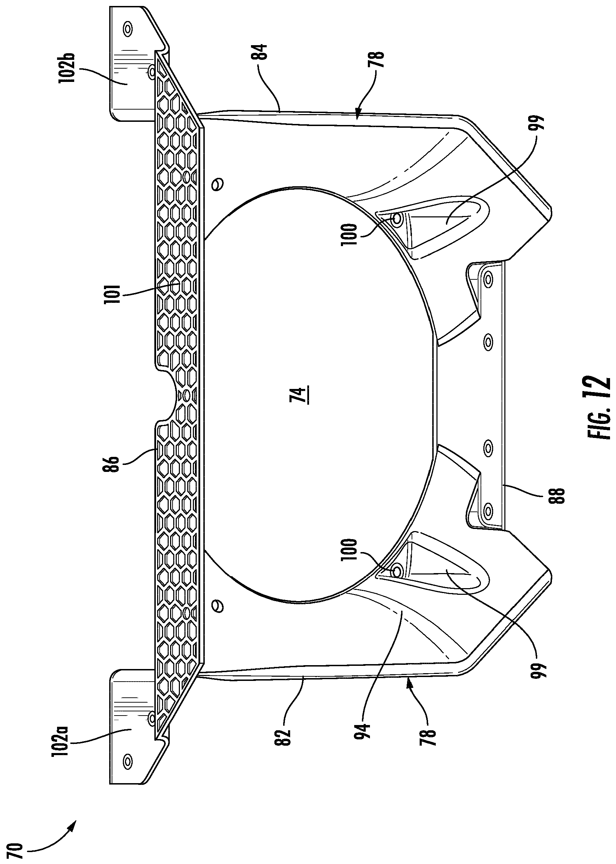

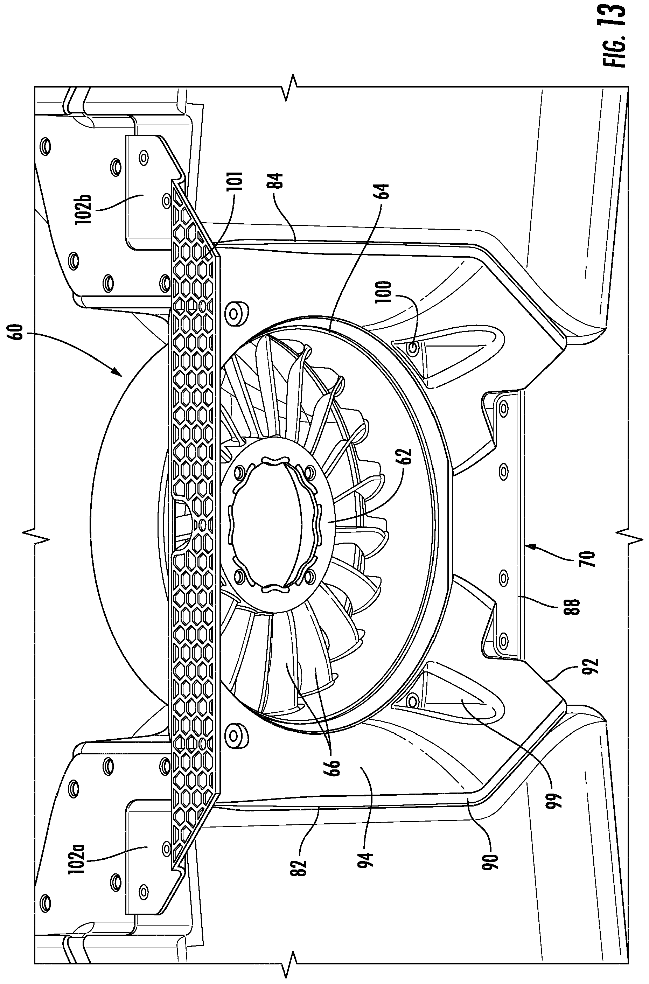

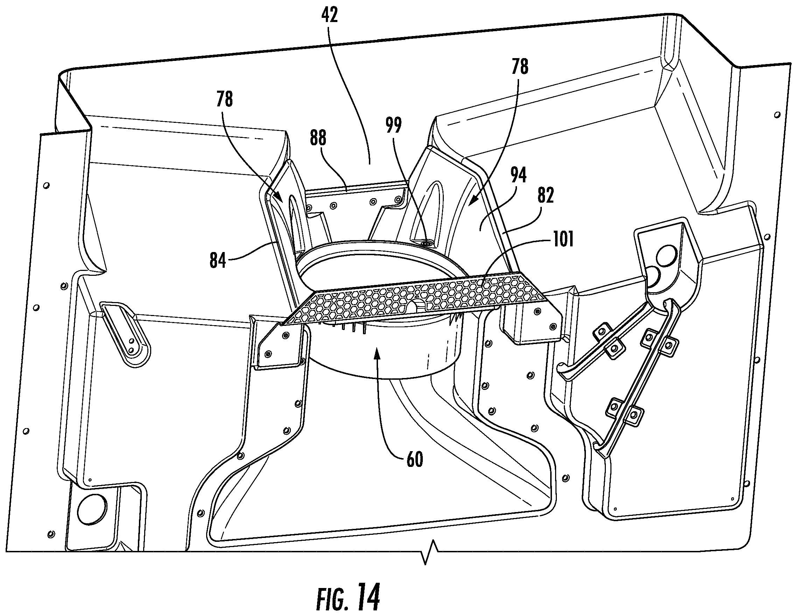

With reference now to FIGS. 5-14 (which depict examples useful for understanding the invention), the axial flow fan 44 mounted within an interior region 42 of the fan and nozzle unit 40 is illustrated in more detail. As shown, the axial flow fan 44 includes a fan inlet including a stator assembly 60 having a stator hub 62, a stator shroud 64, and a plurality of stator vanes 66 extending radially outwardly from the centrally located stator hub 62 to the stator shroud 64. Optionally, the stator assembly 60 includes a mounting flange 68 integrally formed with the stator shroud 64. As shown, the mounting flange 68 is arranged adjacent a first, upstream end of the stator assembly 60 and extends radially outwardly from the stator shroud 64. The mounting flange 68 may extend about an entire periphery of the stator shroud 64, or alternatively, may be arranged at only a portion of the periphery of the stator shroud 64. Furthermore, radial length of the mounting flange 68 may vary about the periphery of the stator shroud 64. As a result, the mounting flange 68 may have a non-circular shape. Optionally, a plurality of ribs 69 extend between an upper surface of the mounting flange 68 and the outer periphery of the stator shroud 64. Inclusion of such ribs 69 may increase the rigidity or stiffness of the stator assembly 60. The stator assembly 60 may be formed from any suitable material including, but not limited to a metal material and a composite material for example. Optionally, the composite material is an injection molded glass filled composite.

A mounting bracket 70 is operable to mount the stator assembly 60 within the interior region 42 of the fan and nozzle unit 40. Optionally, the mounting bracket 70 is formed as a unitary component from a composite material, such as an injection molded glass filled composite material. The mounting bracket 70 includes a body having a main support member 71 having a generally planar first surface 72. The mounting flange 68 of the stator assembly 60 may be positionable in overlapping arrangement with the first surface 72 of the mounting bracket 70. Accordingly, a through hole 74 is formed in the main support member 71 in axial alignment with the stator assembly 60. The through hole 74 may be substantially equal in diameter to the interior of the stator shroud 64 such that a uniformly sized fluid flow path is defined therethrough. The first surface 72 of the mounting bracket 70 may be equal to or may be generally larger than mounting flange 68, as shown. **In** such embodiments, one or more features 76 may protrude from the first surface 72 to facilitate proper positioning of the mounting flange 68 relative to the mounting bracket 70. **In** the illustrated, non-limiting embodiment, several features 76 extend at various locations generally orthogonally from the first surface 72 to form at least a partial boundary or border surrounding the mounting flange 68.

The body additionally includes at least one sidewall 78 extending from the main support member 71. In the illustrated, non-limiting embodiment, the at least one sidewall 78 is integrally formed with a second, opposite surface 80 of the main support member 71 and extends generally downwardly therefrom. The at least one sidewall 78 may be connected to the surface 80 directly adjacent to the through hole 74 or at another portion of the surface 80. As shown, the at least one sidewall 78 includes two sidewalls: a first sidewall 78 arranged adjacent a first side 82 of the body and a second sidewall 78 arranged adjacent a second opposite side 84 of the body. The first and second sidewalls 78 may be substantially identical to one another, such as mirror images of one another (symmetrical) about a central plane.

Optionally, each sidewall 78 extends between a front end 86 of the main support member 71 and a back end 88 of the main support member. An axial length of the sidewall 78 between the front and back ends 86, 88 may be constant, or alternatively, may vary. In the illustrated, non-limiting embodiment, the axial length of the at least one sidewall 78 is shortest near the front end 86 of the main support member 71 and may gradually increase towards the back end 88 of the main support member 71. The at least one sidewall 78 may have an angle or bend 90 formed therein such that the at least one sidewall 78 wraps about a portion of the back end 88. In such embodiments, the axial length of the sidewall 78 may gradually increase from the bend 90 towards the distal end 92 of the sidewall 78. Accordingly, the maximum axial length of the sidewall 78 may be at or near the distal end 92 of the sidewall.

The at least one sidewall 78 has an opposing front surface 94 and back surface 96. In the illustrated, non-limiting embodiment, the back surface 96 of the at least one sidewall 78 is positionable in contact with a corresponding surface within the interior 42 of the fan and nozzle unit 40. To facilitate installation and proper positioning of the body within the fan and nozzle unit 40, the back surface 96 may be substantially complementary to the surface of the fan and nozzle unit 40. With such a complementary configuration, contact between the surface of the fan and nozzle unit 40 and the back surface 46 of the sidewall 78 may be substantially uniform over the back surface 96 of the sidewall 78. Optionally, at least one feature 98 extends between the back surface 96 of the sidewall 78 and the main support member 71. Inclusion of these features 98, such as ribs for example, provides added strength and rigidity to the sidewall 78. In embodiments including these features, contact with the fan and nozzle unit 40 may be uniform about the features 98 extending from the back surface 96.

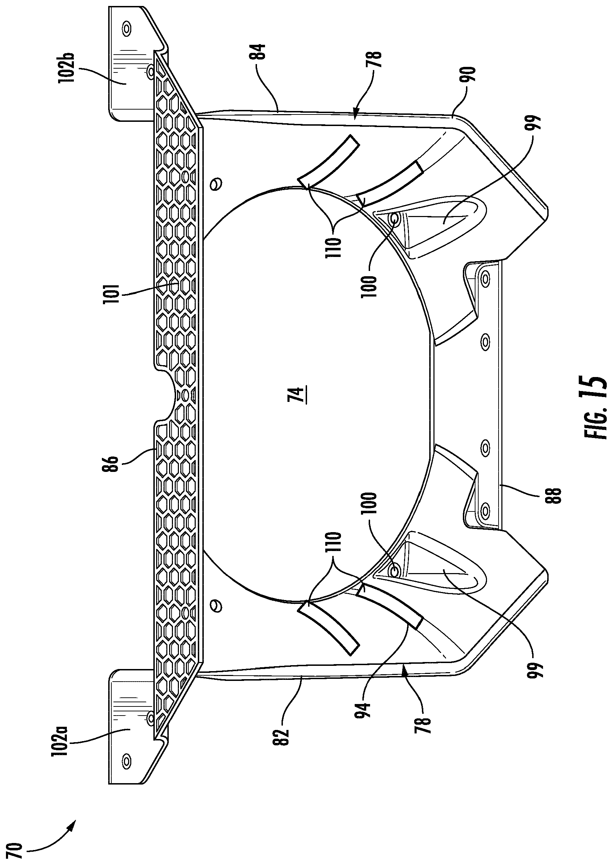

The front surface 94 of the at least one sidewall 78 is substantially smooth to minimize the formation of any interferences within the fluid flow path leading towards the fan 44. Further, in the illustrated, non-limiting embodiment, the front surface 94 of the sidewall 78 is contoured to direct flow from the evaporator section 34 towards an inlet of the fan 44. As shown, the front surface 94 may be formed with a generally convex curvature that curves outwardly from a position adjacent to the through hole 74, similar to a bell mouth shape. Accordingly, a diameter defined by the plurality of sidewalls 78 gradually increases from the smallest diameter at a position adjacent to the main support member 71 to a maximum diameter defined near the free ends of the sidewalls 78. Optionally, shown in FIG. 15, at least one flow feature 110, such as a rib, guide, or flow shaping protrusion extends from the front surface 94 towards a center defined by the at least one sidewall 78. Inclusion of these flow features 100, may assist in directing the flow output from the evaporator coil towards the center of the mounting bracket 70 and the inlet of the axial fan 44.

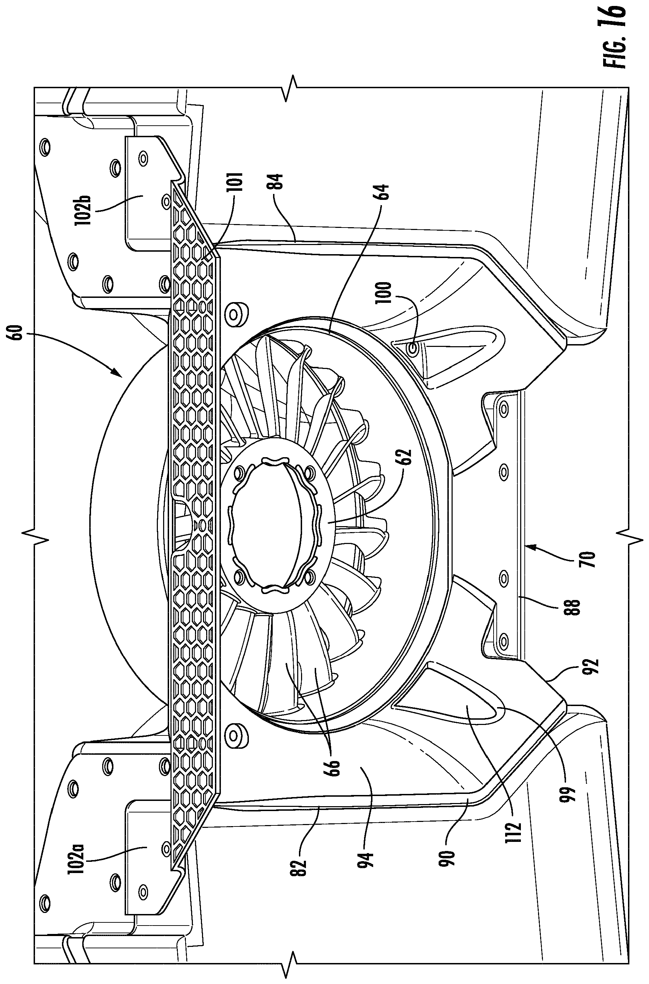

One or more fasteners 100 may be used to affix the stator assembly 60 to the mounting bracket 70. Optionally, one or more cavities 99 may be formed in the front surface 94 of each sidewall 78. In the illustrated, non-limiting embodiment, the cavity 99 provides access to a fastener 100 operable to couple the main support member 71 of the mounting bracket 70 to the mounting flange 68 of the stator assembly 60. However, embodiments that have a continuous surface absent a cavity 99 are also contemplated herein. As shown in FIG. 16, the mounting bracket 70 may include a cover 112 removably positionable in overlapping arrangement with each cavity 99 to form a smooth front surface 94 thereat. For example, the cover 112 may connect to the sidewall 78 via a snap fit or press-fit connection. Alternatively, the cavities 99 may be absent from the sidewalls 78. Further, the front surface 94 may have one or more rivets or openings through which fasteners operable to mount the mounting bracket 70 may be installed.

The body of the mounting bracket 70 may include a front wall 101 extending from the front end 86 at an angle relative to the main support member 71. The axial length of the front wall 101 is only a portion of the axial length of the sidewalls. However, embodiments where the axial length of the front wall 101 is extended are also contemplated herein. In the illustrated, non-limiting embodiment, the front wall 101 is oriented substantially parallel to the axis of the fan, and therefore generally perpendicular to the planar surface 72. However, embodiments where the front wall 101 is arranged at another angle are also within the scope of the invention. Optionally, to increase the rigidity of the structure, a honeycomb-like pattern is formed at a surface of the front wall 101, such as the surface facing away from the mounting bracket 70.

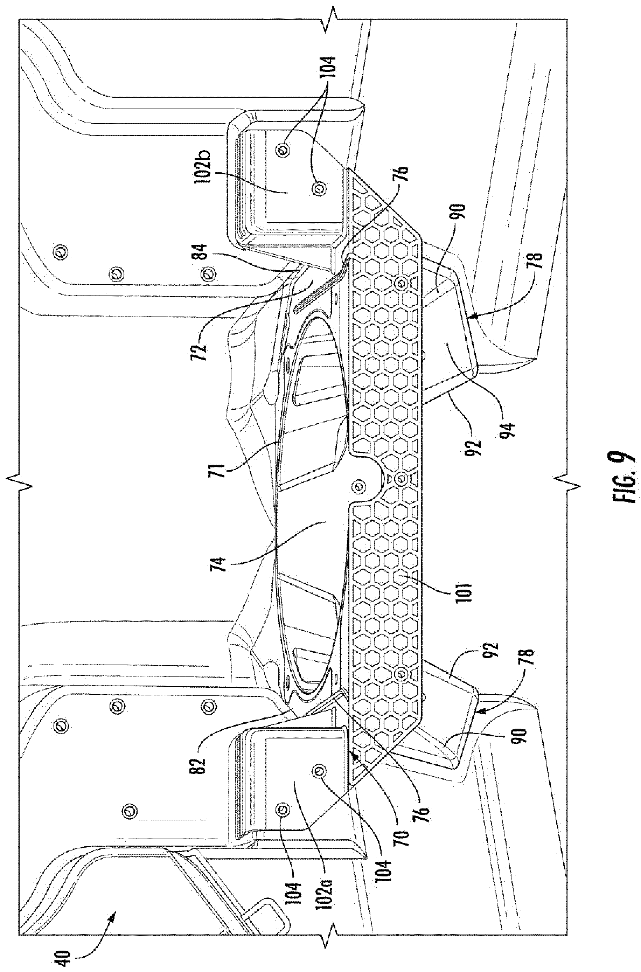

As shown in FIG. 9, the front wall 101 may include a cutout 103, such as extending downwardly from the planar first surface 72, to facilitate installation of the fan 44. Although a u-shaped cutout is illustrated in the FIG., it should be understood that a cutout having another shape is also within the scope of the invention. However, embodiments of the of the mounting bracket 70 where the front wall 101 does not include a cutout are also contemplated herein.

The mounting bracket 70 may additionally include one or more mounting members positionable in overlapping arrangement with a surface of the fan and nozzle unit 40. The mounting members may be integrally formed with the body, or alternatively, may be a separate component connected to the main support member 71. In the illustrated, non-limiting example, a first mounting member 102a extends from the first surface 72, near the front end 86 and the first side 82 of the main support member 71. Alternatively, or in addition, a second mounting member 102b extends from the first surface 72, near the front end 86 and the second side 84 of the main support member 71. As shown, each mounting member 102a, 102b has three surfaces extending generally perpendicular to one another to form a corner-like configuration. In such embodiments each mounting member 102a, 102b is positioned over a corresponding corner formed in the fan and nozzle unit 40. However, it should be understood that a mounting member 102a, 102b having another suitable configuration that overlaps one or more surfaces of the fan and nozzle unit 40 are also contemplated herein. The at least one mounting member 102a, 102b may be attached to the fan and nozzle unit 40 via one or more fasteners 104, such as screws or bolts for example.

The axial fan 44 is supported by the stator assembly 60 mounted to the first surface 72 of the mounting bracket 70. Accordingly, the position of the axial fan 44 may be dependent on the height of the mounting members 102a, 102b relative to the first surface 72 of the mounting bracket 70. Accordingly, the height of the mounting members 102a, 102b may be adjusted to position the axial fan 44 at a specific distance from the plenum or from the heat exchanger coil 38. In an embodiment, the axial distance between the top of the mounting members 102a, 102b and the first surface 72 is between about 80mm and about 150mm.

A mounting bracket 70 as illustrated and described herein enhances the air flow towards the fan, without requiring any changes to the existing contour of the fan and nozzle unit 40. Further, although the mounting bracket 70 is illustrated and described herein with respect to an evaporator coil, it should be appreciated that the mounting bracket may be adapted for use with any heat exchanger, such as condenser 32 for example.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that the present invention is not limited to the particular embodiment disclosed as the best mode contemplated for carrying out this present invention, but that the present invention will include all embodiments falling within the scope of the claims.

## Claims

1. A transport refrigeration unit (30) comprising:
a fan and nozzle unit (40);
a heat exchanger coil (38);
an axial fan (44) having a vertically oriented fan axis, the axial fan (44) being positioned within the fan and nozzle unit (40) to draw air through the heat exchanger coil (38) and discharge the air vertically upwards; and
a mounting bracket (70) for mounting the axial fan (44) in the fan and nozzle unit (40) comprising:
a main support member (71) having an opposing first surface (72) and second surface (80) and a through hole (74); and being **characterized by**
at least one sidewall (78) integrally formed with and extending from the second surface (80), the at least one sidewall (78) having a smooth front surface (94), wherein a curvature of the front surface (94) facilitates an air flow towards a fan inlet.

2. The transport refrigeration unit (30) of claim 1, wherein a diameter defined by the at least one sidewall (78) gradually increases from adjacent the main support member (71) to a distal end (92) of the at least one sidewall (78).

3. The transport refrigeration unit (30) of claim 1 or 2, wherein the at least one sidewall (78) has a back surface (96) opposite the front surface (94), the back surface (96) having a configuration complementary to a surface of the fan and nozzle unit (40), optionally further comprising at least one feature (98) arranged at the back surface (96), wherein the at least one feature (98) extends between the back surface (96) and the main support member (71).

4. The transport refrigeration unit (30) of any preceding claim, wherein the main support member (71) has a front end (86) and a back end (88), the at least one sidewall (78) extending between the front end (86) and the back end (88), wherein an axial length of the at least one sidewall (78) varies between the front end (86) and the back end (88).

5. The transport refrigeration unit (30) of claim 4, wherein the axial length of the at least one sidewall (78) gradually increases from the front end (86) towards the back end (88), and/or wherein the at least one sidewall (78) has a bend (90) formed therein such that the at least one sidewall (78) wraps about the back end (88) of the main support member (71).

6. The transport refrigeration unit (30) of any preceding claim, wherein the at least one sidewall (78) includes a first sidewall and a second sidewall, the first sidewall and the second sidewall being symmetrical about a central plane.

7. The transport refrigeration unit (30) of any preceding claim, wherein the main support member (71) has a front end (86) and a back end (88), the mounting bracket (70) further comprising a front wall (101) extending from the front end (86) at an angle thereto, optionally wherein the front wall (101) is arranged perpendicular to the main support member (71).

8. The transport refrigeration unit (30) of claim 7, wherein the front wall (101) further comprises a honeycomb-like pattern which is formed at a surface thereof.

9. The transport refrigeration unit (30) of any preceding claim, further comprising at least one feature (76) protruding from a first surface (72) of the main support member (71), wherein the at least one feature (76) defines at least a portion of a boundary within which the axial fan (44) is positionable.

10. The transport refrigeration unit (30) of any preceding claim, further comprising at least one mounting member (102a, 102b) extending from the first surface (72) of the main support member (71), the at least one mounting member (102a, 102b) being positionable in overlapping arrangement with a surface of the fan and nozzle unit (40), optionally wherein the at least one mounting member (102a, 102b) has a corner-like configuration.

11. The transport refrigeration unit (30) of any preceding claim, wherein the mounting bracket (70) is formed from a composite material, optionally wherein the mounting bracket (70) is formed from a glass filled composite material.

## Patentansprüche

1. Transportkühleinheit (30), umfassend:
eine Gebläse- und Düseneinheit (40);
eine Wärmetauscherschlange (38);
ein Axialgebläse (44), das eine vertikal ausgerichtete Gebläseachse aufweist, wobei das Axialgebläse (44) innerhalb der Gebläse- und Düseneinheit (40) positioniert ist, um Luft durch die Wärmetauscherschlange (38) anzusaugen und die Luft vertikal nach oben abzugeben; und
eine Montagehalterung (70) zum Montieren des Axialgebläses (44) in der Gebläse- und Düseneinheit (40), die Folgendes umfasst:
ein Hauptträgerelement (71), das eine ersten Fläche (72) und eine zweiten Fläche (80), die einander gegenüberliegen, und ein Durchgangsloch (74) aufweist; und **gekennzeichnet durch**
mindestens eine Seitenwand (78), die einstückig mit der zweiten Fläche (80) gebildet ist und sich von dieser erstreckt, wobei die mindestens eine Seitenwand (78) eine glatte vordere Fläche (94) aufweist, wobei eine Krümmung der vorderen Fläche (94) einen Luftstrom in Richtung eines Gebläseeinlasses erleichtert.

2. Transportkühleinheit (30) nach Anspruch 1, wobei ein durch die mindestens eine Seitenwand (78) definierter Durchmesser von benachbart dem Hauptträgerelement (71) zu einem distalen Ende (92) der mindestens einen Seitenwand (78) allmählich zunimmt.

3. Transportkühleinheit (30) nach Anspruch 1 oder 2, wobei die mindestens eine Seitenwand (78) eine hintere Fläche (96) gegenüber der vorderen Fläche (94) aufweist, wobei die hintere Fläche (96) eine Konfiguration aufweist, die komplementär zu einer Fläche der Gebläse- und Düseneinheit (40) ist, optional ferner mindestens ein Merkmal (98) umfassend, das an der hinteren Fläche (96) angeordnet ist, wobei sich das mindestens eine Merkmal (98) zwischen der hinteren Fläche (96) und dem Hauptträgerelement (71) erstreckt.

4. Transportkühleinheit (30) nach einem der vorhergehenden Ansprüche, wobei das Hauptträgerelement (71) ein vorderes Ende (86) und ein hinteres Ende (88) aufweist, wobei sich die mindestens eine Seitenwand (78) zwischen dem vorderen Ende (86) und dem hinteren Ende (88) erstreckt, wobei eine axiale Länge der mindestens einen Seitenwand (78) zwischen dem vorderen Ende (86) und dem hinteren Ende (88) variiert.

5. Transportkühleinheit (30) nach Anspruch 4, wobei die axiale Länge der mindestens einen Seitenwand (78) von dem vorderen Ende (86) in Richtung des hinteren Endes (88) allmählich zunimmt, und/oder wobei die mindestens eine Seitenwand (78) eine darin gebildete Biegung (90) derart aufweist, dass die mindestens eine Seitenwand (78) um das hintere Ende (88) des Hauptträgerelements (71) verläuft.

6. Transportkühleinheit (30) nach einem der vorhergehenden Ansprüche, wobei die mindestens eine Seitenwand (78) eine erste Seitenwand und eine zweite Seitenwand beinhaltet, wobei die erste Seitenwand und die zweite Seitenwand symmetrisch um eine zentrale Ebene sind.

7. Transportkühleinheit (30) nach einem der vorhergehenden Ansprüche, wobei das Hauptträgerelement (71) ein vorderes Ende (86) und ein hinteres Ende (88) aufweist, wobei die Montagehalterung (70) ferner eine vordere Wand (101) umfasst, die sich von dem vorderen Ende (86) in einem Winkel dazu erstreckt, wobei die vordere Wand (101) optional senkrecht zu dem Hauptträgerelement (71) angeordnet ist.

8. Transportkühleinheit (30) nach Anspruch 7, wobei die vordere Wand (101) ferner ein wabenartiges Muster aufweist, das an einer Fläche dieser gebildet ist.

9. Transportkühleinheit (30) nach einem der vorangehenden Ansprüche, ferner umfassend mindestens ein Merkmal (76), das von einer ersten Fläche (72) des Hauptträgerelements (71) vorsteht, wobei das mindestens eine Merkmal (76) mindestens einen Abschnitt einer Begrenzung definiert, innerhalb der das Axialgebläse (44) positionierbar ist.

10. Transportkühleinheit (30) nach einem der vorangehenden Ansprüche, ferner umfassend mindestens ein Montageelement (102a, 102b), das sich von der ersten Fläche (72) des Hauptträgerelements (71) erstreckt, wobei das mindestens eine Montageelement (102a, 102b) in überlappender Anordnung mit einer Fläche der Gebläse- und Düseneinheit (40) positionierbar ist, wobei das mindestens eine Montageelement (102a, 102b) optional eine eckenartige Konfiguration aufweist.

11. Transportkühleinheit (30) nach einem der vorhergehenden Ansprüche, wobei die Montagehalterung (70) aus einem Verbundwerkstoff gebildet ist, wobei die Montagehalterung (70) optional aus einem glasgefüllten Verbundwerkstoff gebildet ist.

## Revendications

1. Unité de réfrigération de transport (30) comprenant :
une unité de ventilateur et de buse (40) ;
un serpentin échangeur de chaleur (38) ;
un ventilateur axial (44) ayant un axe de ventilateur orienté verticalement, le ventilateur axial (44) étant positionné à l'intérieur de l'unité de ventilateur et de buse (40) pour aspirer l'air à travers le serpentin échangeur de chaleur (38) et évacuer l'air verticalement vers le haut ; et
un support de montage (70) pour monter le ventilateur axial (44) dans l'unité de ventilateur et de buse (40) comprenant :
un élément de support principal (71) ayant une première surface (72) et une seconde surface (80) en regard l'une de l'autre et un trou traversant (74) ; et étant **caractérisé par**
au moins une paroi latérale (78) formée d'un seul tenant avec la seconde surface (80), et s'étendant à partir de celle-ci, l'au moins une paroi latérale (78) ayant une surface avant lisse (94), dans laquelle une courbure de la surface avant (94) facilite un écoulement d'air vers une entrée de ventilateur.

2. Unité de réfrigération de transport (30) selon la revendication 1, dans laquelle un diamètre défini par l'au moins une paroi latérale (78) augmente progressivement depuis la zone adjacente à l'élément de support principal (71) jusqu'à une extrémité distale (92) de l'au moins une paroi latérale (78).

3. Unité de réfrigération de transport (30) selon la revendication 1 ou 2, dans laquelle l'au moins une paroi latérale (78) présente une surface arrière (96) en regard de la surface avant (94), la surface arrière (96) présentant une configuration complémentaire à une surface de l'unité de ventilateur et de buse (40), comprenant éventuellement également au moins un élément (98) agencé au niveau de la surface arrière (96), dans laquelle l'au moins un élément (98) s'étend entre la surface arrière (96) et l'élément de support principal (71).

4. Unité de réfrigération de transport (30) selon une quelconque revendication précédente, dans laquelle l'élément de support principal (71) comporte une extrémité avant (86) et une extrémité arrière (88), l'au moins une paroi latérale (78) s'étendant entre l'extrémité avant (86) et l'extrémité arrière (88), dans laquelle une longueur axiale de l'au moins une paroi latérale (78) varie entre l'extrémité avant (86) et l'extrémité arrière (88).

5. Unité de réfrigération de transport (30) selon la revendication 4, dans laquelle la longueur axiale de l'au moins une paroi latérale (78) augmente progressivement de l'extrémité avant (86) vers l'extrémité arrière (88), et/ou dans laquelle l'au moins une paroi latérale (78) présente un coude (90) formé en son sein de telle sorte que l'au moins une paroi latérale (78) s'enroule autour de l'extrémité arrière (88) de l'élément de support principal (71).

6. Unité de réfrigération de transport (30) selon une quelconque revendication précédente, dans laquelle l'au moins une paroi latérale (78) comprend une première paroi latérale et une seconde paroi latérale, la première paroi latérale et la seconde paroi latérale étant symétriques par rapport à un plan central.

7. Unité de réfrigération de transport (30) selon une quelconque revendication précédente, dans laquelle l'élément de support principal (71) présente une extrémité avant (86) et une extrémité arrière (88), le support de montage (70) comprenant également une paroi avant (101) s'étendant à partir de l'extrémité avant (86) selon un angle donné par rapport à celle-ci, dans laquelle éventuellement la paroi avant (101) est agencée perpendiculairement à l'élément de support principal (71).

8. Unité de réfrigération de transport (30) selon la revendication 7, dans laquelle la paroi avant (101) comprend également un motif en nid d'abeille qui est formé sur une surface de celle-ci.

9. Unité de réfrigération de transport (30) selon une quelconque revendication précédente, comprenant également au moins un élément (76) faisant saillie à partir d'une première surface (72) de l'élément de support principal (71), dans laquelle l'au moins un élément (76) définit au moins une partie d'une limite à l'intérieur de laquelle peut être positionné le ventilateur axial (44).

10. Unité de réfrigération de transport (30) selon une quelconque revendication précédente, comprenant également au moins un élément de montage (102a, 102b) s'étendant à partir de la première surface (72) de l'élément de support principal (71), l'au moins un élément de montage (102a, 102b) pouvant être positionné selon un agencement de chevauchement avec une surface de l'unité de ventilateur et de buse (40), dans laquelle éventuellement l'au moins un élément de montage (102a, 102b) a une configuration en forme de coin.

11. Unité de réfrigération de transport (30) selon une quelconque revendication précédente, dans laquelle le support de montage (70) est formé à partir d'un matériau composite, dans laquelle éventuellement le support de montage (70) est formé à partir d'un matériau composite chargé de verre.
